# EUROPEAN PATENT SPECIFICATION

(11) **EP 2 746 630 B1**
(45) Date of publication and mention of the grant of the patent: **10.07.2019**
(21) Application number: 13195862.1
(22) Date of filing: 05.12.2013
(51) Int. Cl.: F16K 15/00, F16K 27/08

(54) **Cartridge for one-way valve**
Kartusche für Einwegventil
Cartouche de valve unidirectionnelle

(30) Priority: 20.12.2012 IT PD20120396
(43) Date of publication of application: 25.06.2014
(73) Proprietor: Dab Pumps S.p.A., 35035 Mestrino (Padova) (IT)
(72) Inventor: Tazioli, Stefano, 57016 ROSIGNANO MARITTIMO, Località Gabbro LI (IT); Sinico, Francesco, 36075 MONTECCHIO MAGGIORE VI (IT)
(74) Representative: Modiano, Micaela Nadia

(56) References cited:
- WO-A1-2006/005302
- DE-U1- 8 633 833
- US-A- 3 272 219
- US-A- 4 936 339

## Description

The present invention relates to an arrangement comprising a cartridge, a one-way valve and a delivery duct.

Relevant prior art is disclosed in documents US-A-3 272 219 and US-A-4 936 339. Generally, a hydraulic pumping system is provided with a one-way valve that is installed on the delivery pipe of the pump in order to ensure the flow occurs in a single direction and therefore prevent backflow.

The valve is provided with a flow control element, which is coupled by a guide which intercepts a seat on which it forms a seal with a gasket and is pushed by a slightly preloaded spring so as to keep the valve closed, preventing the passage of liquid. With a delivery pressure that is sufficient to overcome the preloading of the spring, the flow control element translates, thus causing the opening of the valve.

Since the valve is in direct contact with the liquid, it is subject to wear and to dirtying.

One problem in particular is linked to scale deposits, the pieces of which, by detaching from the walls of the duct, can be deposited on the gasket, reducing the quality of the closure of the valve. The valve must be removed from the device and cleaned of its scale deposits.

Another problem occurs if the liquid, typically water, is drawn from a well, from which it often rises with sand particles that cause wear of the valve. In this case the valve must be replaced.

These and others are the causes that make extraction of the one-way valve in maintenance operations indispensable.

However, a significant drawback that occurs during these operations is the fact that very often the valve is installed inside a pumping device, and since it is installed in series with the rest of the structure its extraction requires the disassembly of the device and therefore lengthy and complicated operations.

The aim of the present invention is to provide a cartridge for a one-way valve that facilitates its extraction from the delivery duct and from the pumping device in which it is installed.

Within this aim, an object of the invention is to extract the one-way valve without opening or disassembling the pumping device, in order to reduce drastically its maintenance times.

This aim, as well as this object and others that will become more apparent hereinafter, are achieved by an arrangement defined by appended claim 1.

Furthermore, the present invention relates to the use of a tool that supports means for the engagement and extraction of the cartridge, which comprise an engagement portion that extends in the shape of a fork, with two tabs that terminate in a dovetail shape so as to form a self-centering tapering opening for the accommodation of a flat gripping portion of said grip portion, said tabs also each having a grip tooth that enters by snap action a window of said flat gripping portion for its retention between them during the extraction of said cartridge.

Further characteristics and advantages of the invention will become more apparent from the description of a preferred but not exclusive embodiment of the cartridge according to the invention, illustrated by way of non-limiting example in the accompanying drawings, wherein:

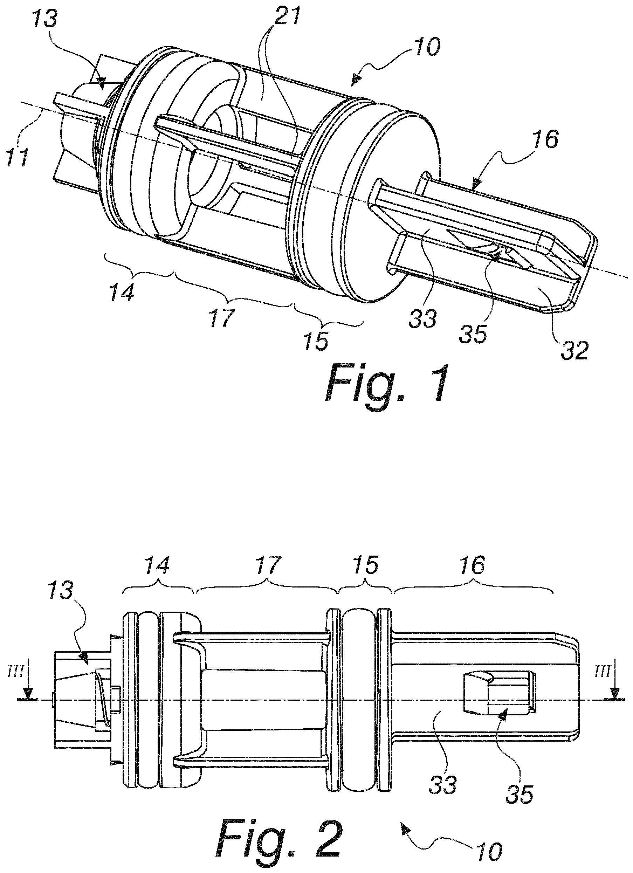

Figure 1 is a perspective view of the cartridge according to the invention, provided with the one-way valve;
Figure 2 is a side view of the cartridge according to the invention, again provided with the one-way valve;
Figure 3 is a sectional view of Figure 2, along the plane III-III;
Figure 4 is a sectional view of the cartridge according to the invention, applied with the one-way valve to a delivery duct of an electric pump;
Figure 5 is a view of the cartridge according to the invention during its extraction from the delivery duct by adapted means for engagement and extraction of a tool;
Figure 6 is a view of an example of a tool provided with the engagement and extraction means to be used to extract the cartridge.

With reference to the cited figures, the cartridge according to the invention, generally designated by the reference numeral 10, has the shape of an elongated body made of plastic material, which extends along an axis that coincides substantially with a translation axis 11 of a flow control element 12 of the one-way valve 13.

Advantageously, the cartridge 10 comprises a first portion 14, substantially an end portion, which supports the one-way valve 13, and a second portion 15, from which a grip portion 16 protrudes for the extraction of said cartridge 10 from the pumping device in which the electric pump is installed.

The two portions, the first one 14 and the second one 15, are connected by a third portion 17, which is intermediate between the two and is substantially shaped like a cage.

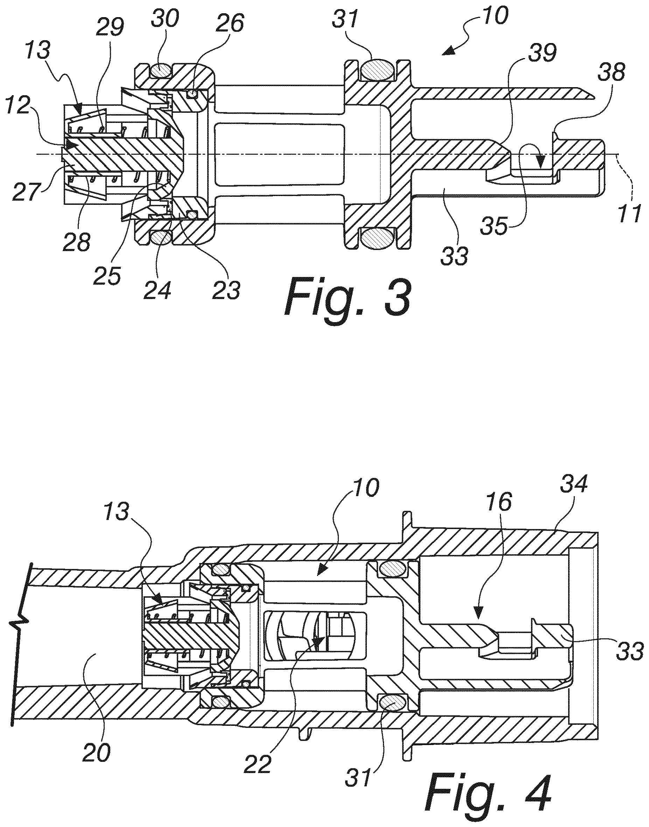

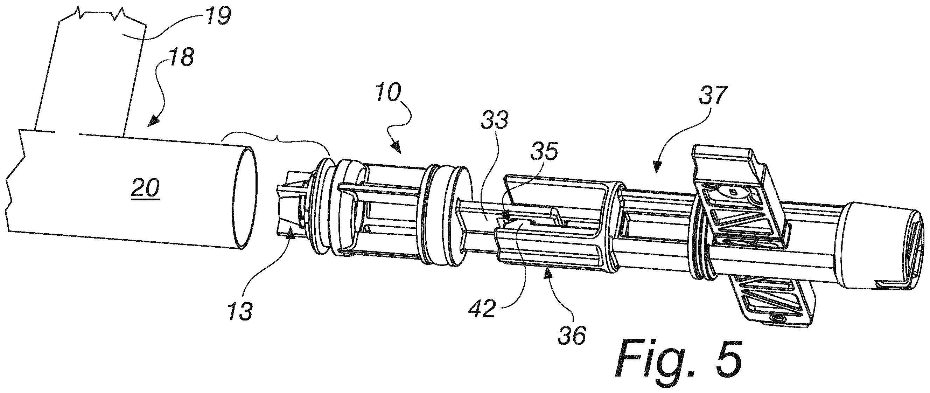

The cartridge 10, in the particular described embodiment, as shown in Figures 4 and 5, lends itself to be applied to a delivery duct 18 that is provided with a first part 19 and a second part 20 that is transverse to the first one and in which said cartridge 10 is inserted at least partially.

Its third portion 17 in fact upon insertion is arranged at the blending region between the two parts, the first one 19 and the second one 20, of the delivery duct 18, since it is substantially cage-shaped and in particular it consists of a series of equidistant longitudinal elements 21 for connection between the first and second portions 14 and 15 respectively. Figure 4 designates the opening 22 of the first portion 19, shown more clearly in the subsequent figure, from which the liquid pumped by the electric pump strikes the third portion 17 to pass through it, reaching the one-way valve 13 at the first portion 14.

More precisely, the first portion 14 is substantially annular and accommodates concentrically a one-way valve 13 of an already known type. Another annular element 23, which belongs to the one-way valve 13, being provided with a gasket 24, preferably of the lip type, as shown clearly by the sectional view of Figure 3, acts as a shoulder for the flow control element 12, which is substantially mushroom-shaped and abuts with a closure head 25 during the closure of the one-way valve 13, translating along the translation axis 11.

The one-way valve 13 is associated with the cartridge 10 by means of the annular element 23 and conveniently with a gasket of the O-ring type 26, with which it is already normally provided for usual installations in delivery ducts.

The flow control element 12 is provided with a closure head 25 and with a stem 27 that is coupled in a guide 28 and is partially surrounded by a preloaded spring 29.

Moreover, the first portion 14 has an external groove in which a first O-ring gasket 30 is arranged and likewise the second portion 15 is provided with a second O-ring gasket 31, in order to be connected to the delivery duct 18 without the occurrence of leaks of liquid.

As regards the grip portion 16, it extends from the second portion 15 outside the delivery duct 18, in the direction of the translation axis 11 of the flow control element 12 and with a T-shaped profile, comprising a flat strengthening portion 32 and a flat gripping portion 33 that is perpendicular to the preceding one.

In the example of application shown in Figure 4, it is evident that the grip portion 16 is in an extension 34 of the second portion 20 that is kept dry thanks to the second O-ring gasket 31; however, said portion can protrude directly from an opening of the delivery duct or from external walls of the device.

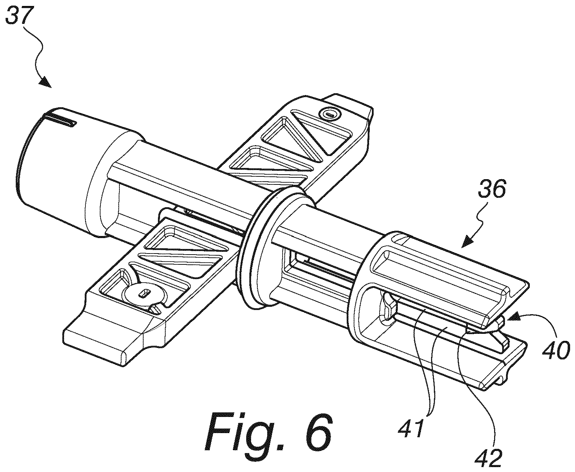

The flat gripping portion 33 is provided with a window 35 for the snap engagement of adapted means 36 for engagement and extraction of the cartridge 10, which are part of, for example, a multipurpose tool 37 such as the one shown in Figure 5 and, on its own, in Figure 6.

The window 35 has, on one side of its edge, the first one that is encountered from the outside in the axial direction, a grip protrusion 38 for the engagement and extraction means 36, while it has on the opposite side a bevel 39 for the disengagement of such means 36.

For the extraction of the cartridge 10 that supports the one-way valve 13, it is preferable to use adapted engagement and extraction means 36; however, pliers or similar tools can also be used.

As shown more clearly in Figure 6, said means are of the type that comprises an engagement portion 40 that extends in a fork-like arrangement, with two tabs 41 that terminate in a dovetail shape so as to form a self-centering tapering opening for accommodating the flat gripping portion 33. Advantageously, the two tabs 41 are also each provided with a grip tooth 42, which by entering the window 35 with a snap action retain between them the flat grip portion 33 during extraction of the cartridge 10.

The use of the cartridge according to the invention is as follows.

As is clearly visible in the sectional view of Figure 4, initially the cartridge 10 is inserted with its first portion 14 within the second part 20 of the delivery duct 18, supporting the one-way valve 13. The third portion 17 is arranged at the height of the blending region of the two first and second parts 19 and 20, and due to its substantially cage-like structure it can be crossed by the liquid pumped by the electric pump that arrives from the first part 19.

The grip portion 16 is in the extension 34 from which the flat gripping portion 33 can be clamped easily by pliers or by other similar manual tools or can be conveniently engaged by means of the tool 37, using the adapted engagement and extraction means 36 as follows.

Simply by pushing the tool 37 in the same direction in which the cartridge 10 was inserted, which substantially coincides with the direction of the translation axis 11 of the flow control element 12 of the one-way valve 13, the two tabs 41 of the engagement portion 40, due to their particular shape which terminates in a dovetail, divaricate and accommodate between them the flat gripping portion 33. The grip teeth 42 move beyond the grip protrusion 38 and enter the window 35 with a snap action. The grip protrusion 38 prevents the accidental extraction of the tool 37 and the cartridge 10 can be extracted easily, carrying with it the one-way valve 13, simply by pulling the tool 37 in the direction opposite to the preceding pushing direction, as shown in Figure 5.

At the end of extraction, the tool 37 can be disengaged easily from the cartridge 10, by pushing it with the tabs 41 against the disengagement bevel 39, which facilitates its divarication, and pulling it laterally outward.

At this point the one-way valve 13 is dissociated from the cartridge 10 in order to be replaced, cleaned or repaired.

The cartridge 10 that supports the new or repaired one-way valve 13 is simply inserted by pushing in the second part 20, protruding from it with the grip portion 16, which as mentioned in this case occupies the extension 34.

It should be noted that the cartridge 10 can be sized easily as a function of the dimensions of the delivery duct 11 and of the dimensions of the one-way valve 13 as commercially available; in this manner it can be applied extensively in the field in order to reduce the time to be devoted to maintenance operations.

In practice it has been found that the invention achieves the proposed aim and objects, providing a cartridge for a one-way valve that facilitates its extraction from the delivery duct and from the pumping device in which it is installed. Maintenance operations are in fact facilitated and maintenance times are reduced due to the fact that the one-way valve can be extracted without opening or disassembling the pumping device but simply by extracting said cartridge that supports it at its end portion.

The invention thus conceived is susceptible of numerous modifications and variations, all of which are within the scope of the appended claims.

In practice, the materials used, so long as they are compatible with the specific use, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An arrangement comprising:
- a cartridge (10),
- a one-way valve (13) comprising a flow control element (12) and an annular element (23) whereby the flow control element (12) cooperates with a valve seat provided on the annular element (23) to open and close the valve, and
- a delivery duct,
- said cartridge (10) removably supporting the one-way valve (13),
- said cartridge having the shape of an elongated body extending along a translation axis (11) of the flow control element (12) of said one-way valve (13) and comprising a first portion (14), which is substantially annular and which supports said one-way valve (13) by means of an O-ring gasket (26) provided on the annular element (23) of said one-way valve (13) and which is removably inserted into said delivery duct (18), and a second portion (15), from which a grip portion (16) for the extraction of said cartridge (10) protrudes and remains outside a flow passage of said delivery duct (18), said first portion (14) and said second portion (15) are connected by a third substantially cage-like portion (17) that is arranged at a blending region between a first part (19) and a second part (20), which is transverse to the first one, of said delivery duct (18), said cartridge (10) being removably inserted at least partially in said second part (20), said first portion (14) being provided with a first O-ring gasket (30) and said second portion (15) being provided with a second O-ring gasket (31) for connnecting said cartridge (10) to said delivery duct (18) without the occurrence of leaks of fluid.

2. The arrangement according to claim 1, **characterized in that** said grip portion (16) extends outside said delivery duct (18) in the direction of said translation axis (11) and with a T-shaped profile, comprising a flat strengthening portion (32) and a flat gripping portion (33) that is perpendicular to the preceding one.

3. The arrangement according to claim 2, **characterized in that** said flat gripping portion (33) has a window (35) for the snap engagement of engagement and extraction means (36) of said cartridge (10).

4. The arrangement according to claim 3, **characterized in that** said window (35) has, on one side of its edge, a grip protrusion (38) for said engagement and extraction means (36) and, on the opposite side, a bevel (39) for the disengagement of said engagement and extraction means (36).

5. The arrangement according to claim 1, **characterized in that** said third substantially cage-like portion (17) consists of a series of equidistant longitudinal elements (21) for connection between said first portion (14) and said second portion (15).

6. Use of engagement and extraction means (36) for engaging and extracting the cartridge (10) of the arrangement according to one or more of the preceding claims, comprising an engagement portion (40) that extends in a fork-like manner, with two tabs (41) that terminate in a dovetail shape so as to form a self-centering tapering opening for the accommodation of a flat gripping portion (33) of said grip portion (16), said tabs (41) also each having a grip tooth (42) that enters, by snap action, a window (35) of said flat gripping portion (33) for its retention between them during the extraction of said cartridge (10).

## Patentansprüche

1. Ein Aufbau, der Folgendes umfasst:
- eine Kartusche (10),
- ein Einwegventil (13), das ein Durchflussregelelement (12) und ein Ringelement (23) umfasst, wobei das Durchflussregelelement (12) mit einem Ventilsitz zusammenarbeitet, der an dem Ringelement (23) angebracht ist, um das Ventil zu öffnen und zu schließen, und
- eine Zuführleitung,
- wobei die Kartusche (10) das Einwegventil (13) herausnehmbar trägt,
- wobei die Kartusche die Form eines lang gestreckten Körpers hat, der sich entlang einer Translationsachse (11) des Durchflussregelelements (12) des Einwegventils (13) erstreckt und einen ersten Abschnitt (14) umfasst, der im Wesentlichen ringförmig ist und das Einwegventil (13) mit Hilfe einer O-Ring-Dichtung (26) trägt, die an dem Ringelement (23) des Einwegventils (13) angebracht und herausnehmbar in die Zuführleitung (18) eingesetzt ist; und einen zweiten Abschnitt (15), aus dem ein Griffabschnitt (16) zum Herausziehen der Kartusche (10) herausragt und außerhalb einer Durchflussleitung der Zuführleitung (18) verbleibt; der erste Abschnitt (14) und der zweite Abschnitt (15) sind durch einen dritten, im Wesentlichen käfigartigen Abschnitt (17) verbunden, welcher in einem Übergangsbereich zwischen einem ersten Teil (19) und einem zweiten Teil (20) der Zuführleitung (18), welcher quer zu dem ersten ist, angeordnet ist; wobei die Kartusche (10) herausnehmbar zumindest teilweise in den zweiten Teil (20) eingeführt ist; wobei der erste Abschnitt (14) mit einer ersten O-Ring-Dichtung (30) versehen ist und der zweite Abschnitt (15) mit einer zweiten O-Ring-Dichtung (31) zum Verbinden der Kartusche (10) mit der Zuführleitung (18) ohne das Auftreten von Fluidleckagen versehen ist.

2. Der Aufbau gemäß Anspruch 1, **dadurch gekennzeichnet, dass** der Griffabschnitt (16) sich außerhalb der Zuführleitung (18) in Richtung der Translationsachse (11) erstreckt und ein T-förmiges Profil hat, das einen flachen Verstärkungsabschnitt (32) und einen flachen Griffabschnitt (33) umfasst, der senkrecht zu diesem ist.

3. Der Aufbau gemäß Anspruch 2, **dadurch gekennzeichnet, dass** der flache Griffabschnitt (33) ein Fenster (35) für die Schnappverbindung von Eingriffs- und Extraktionsmitteln (36) der Kartusche (10) hat.

4. Der Aufbau gemäß Anspruch 3, **dadurch gekennzeichnet, dass** das Fenster (35) an einer Seite seiner Kante einen Griffvorsprung (38) für die Eingriffs- und Extraktionsmittel (36) und an der gegenüberliegenden Seite eine Abschrägung (39) zum Lösen der Eingriffs- und Extraktionsmittel (36) hat.

5. Der Aufbau gemäß Anspruch 1, **dadurch gekennzeichnet, dass** der dritte, im Wesentlichen käfigartige Abschnitt (17) aus einer Reihe äquidistanter länglicher Elemente (21) zur Verbindung zwischen dem ersten Abschnitt (14) und dem zweiten Abschnitt (15) besteht.

6. Verwendung von Eingriffs- und Extraktionsmitteln (36) zum Halten und Herausziehen der Kartusche (10) des Aufbaus gemäß einem oder mehreren der obigen Ansprüche, die einen Eingriffsabschnitt (40) umfassen, der sich gabelartig mit zwei Vorsprüngen (41) erstreckt, welche in Schwalbenschwanzform enden, um eine selbstzentrierende spitz zulaufende Öffnung für die Aufnahme eines flachen Greifabschnitts (33) des Griffabschnitts (16) zu bilden; wobei die Vorsprünge (41) außerdem jeweils einen Greifzahn (42) haben, der durch Schnappwirkung in ein Fenster (35) des flachen Greifabschnitts (33) eindringt, zum Halten desselben zwischen ihnen während der Extraktion der Kartusche (10).

## Revendications

1. Agencement comportant :
- une cartouche (10),
- un clapet anti-retour (13) comportant un élément de régulation d'écoulement (12) et un élément annulaire (23) en sorte que l'élément de régulation d'écoulement (12) coopère avec un siège de clapet agencé sur l'élément annulaire (23) pour ouvrir et fermer le clapet, et
- une conduite de distribution,
- ladite cartouche (10) supportant le clapet anti-retour (13) de manière amovible,
- ladite cartouche ayant la forme d'un corps allongé s'étendant long d'un axe de translation (11) de l'élément de régulation d'écoulement (12) dudit clapet anti-retour (13) et comportant une première portion (14), qui est sensiblement annulaire et qui supporte ledit clapet anti-retour (13) au moyen d'un joint torique (26) agencé sur l'élément annulaire (23) dudit clapet anti-retour (13) et qui est inséré de manière amovible dans ladite conduite de distribution (18), et une deuxième portion (15), à partir de laquelle une portion de prise (16) pour l'extraction de ladite cartouche (10) fait saillie et reste à l'extérieur d'un passage d'écoulement de ladite conduite de distribution (18), ladite première portion (14) et ladite deuxième portion (15) sont reliées par une troisième portion sensiblement analogue à une cage (17) qui est agencée au niveau de la zone de jonction entre une première partie (19) et une seconde partie (20), qui est transversale à la première, de ladite conduite de distribution (18), ladite cartouche (10) étant insérée de manière amovible au moins partiellement dans ladite seconde partie (20), ladite première portion (14) étant pourvue d'un premier joint torique (30) et ladite deuxième portion (15) étant pourvue d'un second joint torique (31) pour relier ladite cartouche (10) à ladite conduite de distribution (18) sans l'occurrence de fuites de fluide.

2. Agencement selon la revendication 1, **caractérisé en ce que** ladite portion de prise (16) s'étend à l'extérieur de ladite conduite de distribution (18) dans la direction dudit axe de translation (11) et avec un profil en forme de T, comportant une portion de renforcement plate (32) et une portion de prise plate (33) qui est perpendiculaire à la précédente.

3. Agencement selon la revendication 2, **caractérisé en ce que** ladite portion de prise plate (33) a une fenêtre (35) pour la prise par encliquetage de moyens d'engagement et d'extraction (36) de ladite cartouche (10) .

4. Agencement selon la revendication 3, **caractérisé en ce que** ladite fenêtre (35) a, sur un côté de son bord, une saillie de prise (38) pour lesdits moyens d'engagement et d'extraction (36), et, sur le côté opposé, un biseau (39) pour le désengagement desdits moyens d'engagement et d'extraction (36).

5. Agencement selon la revendication 1, **caractérisé en ce que** ladite troisième portion sensiblement analogue à une cage (17) est constituée d'une série d'éléments longitudinaux équidistants (21) pour une liaison entre ladite première portion (14) et ladite deuxième portion (15).

6. Utilisation de moyens d'engagement et d'extraction (36) pour engager et extraire la cartouche (10) de l'agencement selon une ou plusieurs des revendications précédentes, comportant une portion d'engagement (40) qui s'étend de manière analogue à une fourche, avec deux languettes (41) qui se terminent en forme de queue d'aronde de manière à former une ouverture d'auto-centrage taillée en pointe pour la réception d'une portion de prise plate (33) de ladite portion de prise (16), lesdites languettes (41) ayant également chacune une dent de prise (42) qui pénètre, par encliquetage, dans une fenêtre (35) de ladite portion de prise plate (33) pour sa retenue entre elles pendant l'extraction de ladite cartouche (10).
